(19) Europäisches Patentamt

European Patent Office

Office européen des brevets

(11) **EP 4 596 347 A1**

(12) **EUROPEAN PATENT APPLICATION**

(43) Date of publication:
06.08.2025 Bulletin 2025/32

(21) Application number: 25154615.6

(22) Date of filing: 29.01.2025

(51) International Patent Classification (IPC):
*B60W 30/095* (2012.01)        *B60W 60/00* (2020.01)
*B60W 50/029* (2012.01)

(52) Cooperative Patent Classification (CPC):
**B60W 30/0956; B60W 60/0015; B60W 60/0018;
B60W 60/00186; B60W 60/0059;** B60W 2050/0292;
B60W 2050/0295; B60W 2552/10; B60W 2552/53;
B60W 2554/402; B60Y 2302/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 01.02.2024  KR 20240015855
07.01.2025  KR 20250002230

(71) Applicants:
• **Hyundai Motor Company**
**Seoul 06797 (KR)**
• **Kia Corporation**
**Seocho-gu,**
**Seoul 06797 (KR)**

(72) Inventors:
• **PARK, Jong Sung**
**18280 Hwaseong-si, Gyeonggi-do (KR)**
• **MIN, Young Bin**
**18280 Hwaseong-si, Gyeonggi-do (KR)**
• **JANG, Chan Jong**
**18280 Hwaseong-si, Gyeonggi-do (KR)**
• **SONG, Moon Hyung**
**18280 Hwaseong-si, Gyeonggi-do (KR)**

(74) Representative: **Isarpatent**
**Patent- und Rechtsanwälte**
**Barth Hassa Peckmann & Partner mbB**
**Friedrichstraße 31**
**80801 München (DE)**

(54) **VEHICLE FOR SEARCHING AND SELECTING SHOULDER STOP POSITION DURING AUTONOMOUS DRIVING AND METHOD FOR OPERATING THE VEHICLE**

(57) Disclosed is a vehicle that may include: at least one sensor configured to detect a surrounding environment associated with the vehicle, a controller configured to control one or more operations of the vehicle, and a processor. The processor may be configured to: generate, based on the at least one sensor, surrounding environment information; generate vehicle state information; determine, based on at least one of the surrounding environment information or the vehicle state information during an autonomous driving operation of the vehicle, whether to perform a minimal risk maneuver; set a region of interest comprising a shoulder of a road; search, within the region of interest, for one or more candidate minimum risk condition (MRC) zones; select, among the one or more candidate MRC zones, a target MRC zone; and control, via the controller, the vehicle to stop in the target MRC zone.

FIG. 2

**Description**

**TECHNICAL FIELD**

The present disclosure relates to autonomous vehicles and more specifically to object recognition for autonomous vehicles.

**BACKGROUND**

Recently, advanced driver assistance systems (ADAS) have been developed to assist drivers in driving vehicles. The ADAS has multiple sub-classifications and provides convenience to the driver. The ADAS is also called autonomous driving or ADS (Automated Driving System).

While the vehicle performs autonomous driving, an abnormal behavior or condition may be encountered. The vehicle may get in danger if appropriate measures are not taken to address such abnormalities in the autonomous driving system.

**SUMMARY**

Therefore, various example embodiments of the present disclosure disclose a vehicle configured to search for and select a position of a shoulder stop (e.g., a location on a shoulder of the road for an emergency stop) if a shoulder stop is needed as a type of a minimal risk maneuver during autonomous driving.

Various example embodiments of the present disclosure disclose a method for operation a vehicle configured to search for and select a position to stop in a shoulder of a road if a shoulder stop is needed as a type of a minimal risk maneuver during autonomous driving.

Technical objects to be achieved by the present disclosure are not limited to the aforementioned objects, and those skilled in the art to which the present disclosure pertains may evidently understand other technical objects from the following description.

According to one or more example embodiments of the present disclosure, a vehicle may include: at least one sensor configured to detect a surrounding environment associated with the vehicle; a controller configured to control one or more operations of the vehicle; and a processor. The processor may be configured to: generate, based on the surrounding environment detected by the at least one sensor, surrounding environment information; monitor a state of the vehicle to generate vehicle state information; determine, based on at least one of the surrounding environment information or the vehicle state information during an autonomous driving operation of the vehicle, whether to perform a minimal risk maneuver; set, based on a determination to perform the minimal risk maneuver and based on a type of the minimal risk maneuver being a shoulder stop, a region of interest including a shoulder of a road; search, within the region of interest, for one or more candidate minimum risk condition (MRC) zones for the shoulder stop; select, among the one or more candidate MRC zones, a target MRC zone; and control, via the controller, the vehicle to stop in the target MRC zone.

The region of interest may have a rectangular shape including four sides. One of the four sides may have a predetermined length and extends from one point of a lateral line that passes a front part of the vehicle in a longitudinal direction of the vehicle. Another one of the four sides may extend from one point of a center line of the road and end at a boundary of the shoulder.

The processor may be configured to search for the one or more candidate MRC zones by: searching for the one or more candidate MRC zones based on at least one of: map information stored in the vehicle, the surrounding environment information, or traffic information.

The processor may be configured to search for the one or more candidate MRC zones by: searching, within the region of interest, for one or more zones for the vehicle to stop in by deaccelerating and moving to a different lane from a current location of the vehicle. The one or more zones may be unoccupied by an obstacle. The one or more zones may be larger than a predetermined reference size.

The processor may be configured to search for the one or more candidate MRC zones by: searching for the one or more candidate MRC zones for a predetermined time.

The processor may be further configured to: after a search for the one or more candidate MRC zones is complete, search for one or more additional candidate MRC zones.

At least two of the one or more candidate MRC zones may have different sizes.

A gap zone may be formed between a candidate MRC zone, of the one or more candidate MRC zones, and an obstacle.

The one or more candidate MRC zones may include: a first candidate MRC zone that is positioned closer to the vehicle than an obstacle on the shoulder, and a second candidate MRC zone that is positioned farther away from the vehicle than the obstacle. A first gap zone may be formed between the first candidate MRC zone and the obstacle. A second gap zone may be formed between the obstacle and the second candidate MRC zone.

The second gap zone may be greater in length than the first gap zone.

The processor may be configured to select the target MRC zone by: selecting the target MRC zone based on at least one of: a size of each of the one or more candidate MRC zones, a distance from the vehicle to each of the one or more candidate MRC zones, a moving path from the vehicle to each of the one or more candidate MRC zones, the vehicle state information, a number of lane changes required for the vehicle to move to each of the one or more candidate MRC zones, the surrounding environment information, or traffic information.

The processor may be further configured to control, via the controller, the vehicle to, based on the target MRC zone being selected, move into the target MRC zone.

According to one or more example embodiments of the present disclosure, a method performed by an apparatus of a vehicle may include: determining, based on at least one of surrounding environment information or vehicle state information during an autonomous driving operation of the vehicle, whether to perform a minimal risk maneuver; setting, based on a determination to perform the minimal risk maneuver and based on a type of the minimal risk maneuver being a shoulder stop, a region of interest including a shoulder of a road; searching, within the region of interest, for one or more candidate minimum risk condition (MRC) zones for the shoulder stop; selecting, among the one or more candidate MRC zones, a target MRC zone; and controlling the vehicle to stop in the target MRC zone.

Searching for the one or more candidate MRC zones may include: searching for the one or more candidate MRC zones based on at least one of: map information stored in the vehicle, the surrounding environment information, or traffic information.

Searching for the one or more candidate MRC zones may include: searching, within the region of interest, for one or more zones for the vehicle to stop in by deaccelerating and moving to a different lane from a current location of the vehicle. The one or more zones may be unoccupied by an obstacle. The one or more zones may be larger than a predetermined reference size.

Searching for the one or more candidate MRC zones may include: searching for the one or more candidate MRC zones for a predetermined time.

The method may further include: after a search for the one or more candidate MRC zones is complete, searching for one or more additional candidate MRC zones.

Selecting the target MRC zone may include: selecting the target MRC zone based on at least one of: a size of each of the one or more candidate MRC zones, a distance from the vehicle to each of the one or more candidate MRC zones, a moving path from the vehicle to each of the one or more candidate MRC zones, the vehicle state information, a number of lane changes required for the vehicle to move to each of the one or more candidate MRC zones, the surrounding environment information, or traffic information.

The method may further include: controlling the vehicle to, based on the target MRC zone being selected, move into the target MRC zone.

According to one or more example embodiments of the present disclosure, a vehicle may include: at least one sensor configured to detect at least one object on a road; a controller configured to control, during an autonomous driving operation of the vehicle, a movement of the vehicle that is travelling on the road; and a processor. The processor may be configured to: generate, based on the detected at least one object on the road, sensing information; generate vehicle state information indicating a state of the vehicle; during the autonomous driving operation of the vehicle, determine, based on at least one of the sensing information or the vehicle state information, to perform a minimal risk maneuver; set, based on the determination to perform the minimal risk maneuver, a region of interest including a shoulder of the road; based on the at least one object, determine, within the region of interest, one or more candidate minimum risk condition (MRC) zones for a shoulder stop; select, among the one or more candidate MRC zones, a target MRC zone; and control, via the controller, the vehicle to stop in the target MRC zone.

**BRIEF DESCRIPTION OF THE DRAWINGS**

FIG. 1 is a block diagram of an example configuration of a vehicle.

FIG. 2 is a functional block diagram showing an example processor.

FIG. 3 shows example minimal risk maneuver strategies according to various vehicle states.

FIGS. 4A and 4B show examples of determining a minimal risk maneuver strategy based on surrounding environment information within a specified minimum risk condition range.

FIG. 5 shows an example of an order of priority of a minimal risk maneuver strategy changing according to neighboring object information within a specified minimum risk condition range.

FIGS. 6A, 6B, and 6C are examples of determining a possibility of a host vehicle colliding with a neighboring vehicle due to a minimal risk maneuver of the host vehicle.

FIG. 7 is an example of determining a minimal risk maneuver strategy for a host vehicle considering a possibility of colliding with a neighboring vehicle due to a minimal risk maneuver of the host vehicle.

FIGS. 8A and 8B are examples of calculating a distance to a neighboring vehicle.

FIG. 9 is a flowchart illustrating an operation of a vehicle.

FIG. 10 is a flowchart illustrating determination of a minimal risk maneuver strategy by a vehicle.

FIG. 11 is a flowchart illustrating operations for searching for a potential minimum risk condition zone and selecting a target minimum risk condition zone during autonomous driving.

FIGS. 12 and 13 are views for describing a region of interest (ROI), a potential minimum risk condition zone, and a target minimum risk condition zone .

FIG. 14 is a flowchart illustrating operations for searching for a potential minimum risk condition zone and selecting a target minimum risk condition zone during autonomous driving.

## DETAILED DESCRIPTION

Hereinafter, one or more example embodiments are described in more detail with reference to accompanying drawings.

The construction and operational effect of the present disclosure will be clearly understood from the following detailed description. Prior to describing example embodiments of the present disclosure in detail, it is noted that throughout the drawings the same components will be denoted by the same reference numerals when possible and a detailed description about existing components and functions is omitted when the subject matter of the present disclosure may be obscured by the description.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

It is also noted that terms used in the detailed description of the present disclosure are defined below.

The vehicle refers to a vehicle in which the automated driving system (ADS) is provided and is capable of the autonomous driving. For example, by the ADS, the vehicle may perform at least one among steering, acceleration, deceleration, lane change and vehicle stopping (short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and example embodiments of the present disclosure are not limited thereto.

A shoulder of a road (also referred to as an emergency stopping lane) may refer to a space between an outermost road boundary (or a boundary of an outermost lane) in a direction in which a vehicle is traveling and a road edge (e.g., a curb, a guardrail). In other words, a shoulder may be an emergency stopping lane by the verge on the outer side of a road (e.g., a street, a highway, a motorway, a speedway, an expressway, etc.). Vehicles may pull into the shoulder and stop on the shoulder, for example, in the event of an emergency or breakdown.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., minimal risk maneuvers) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., minimal risk maneuvers) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., minimal risk maneuvers) described herein.

Minimum risk maneuver (MRM) operation(s) may also be controlled, for example, based on one or more features (e.g., minimal risk maneuvers) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., minimal risk maneuvers) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., minimal risk maneuvers) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

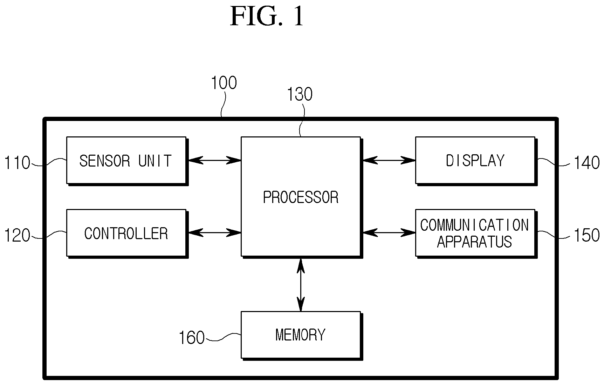

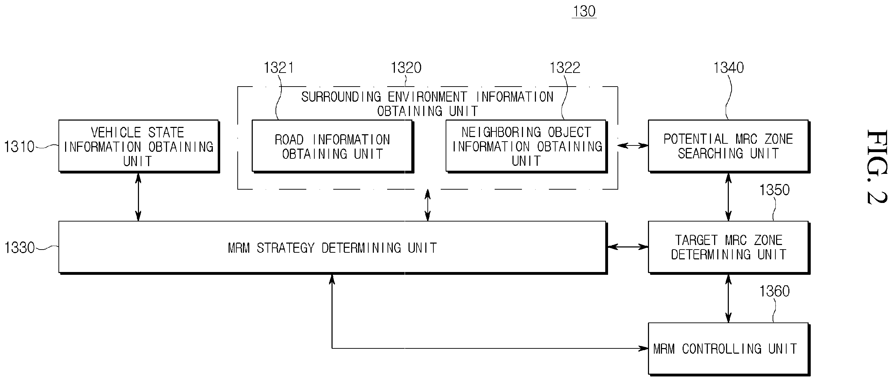

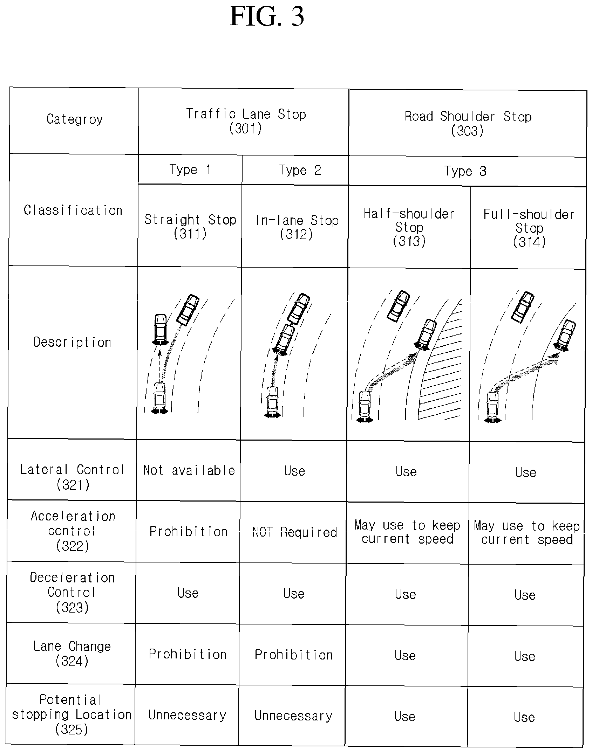

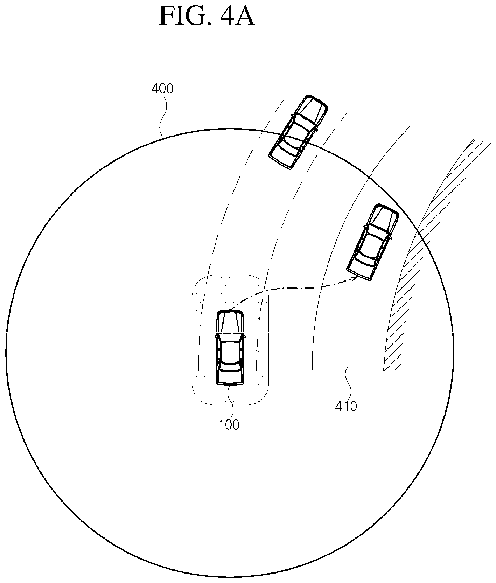

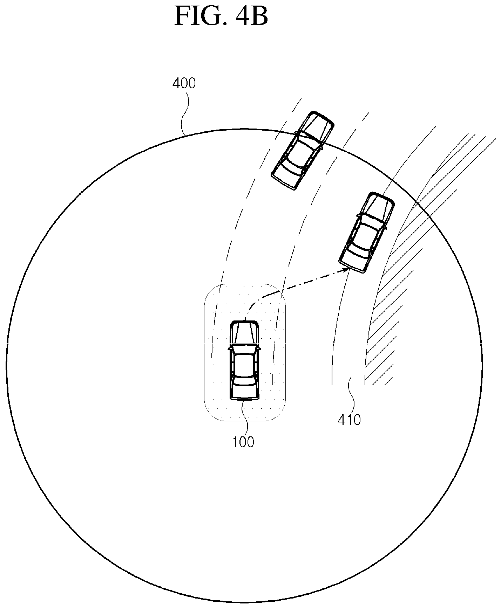

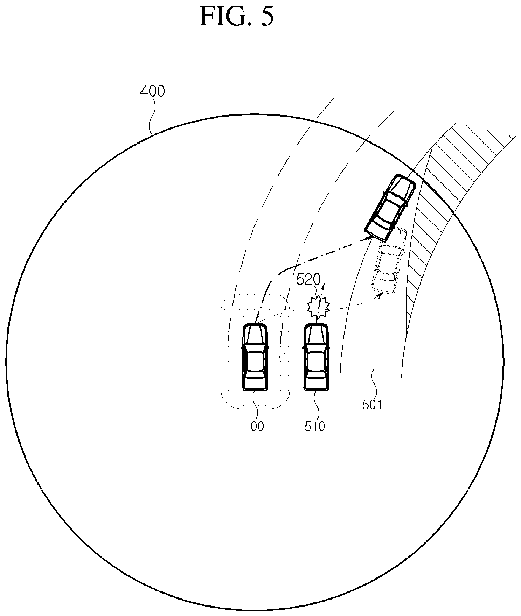

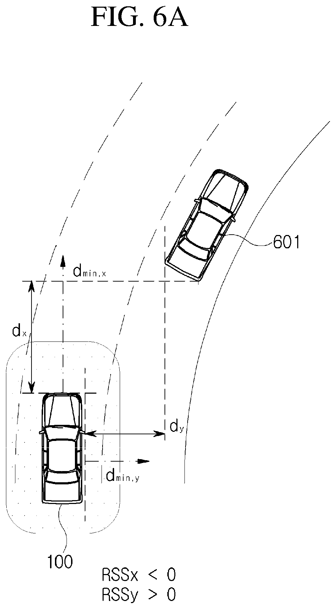

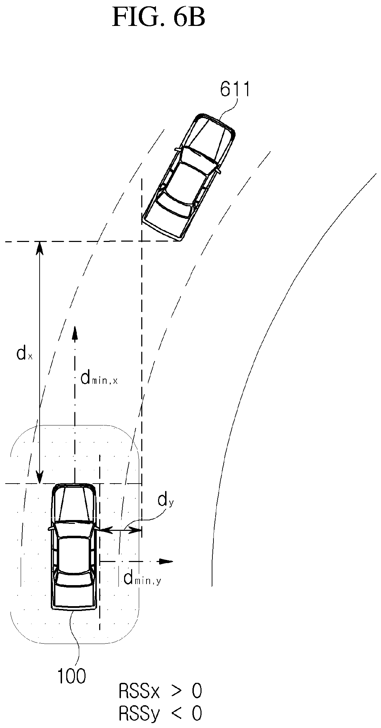

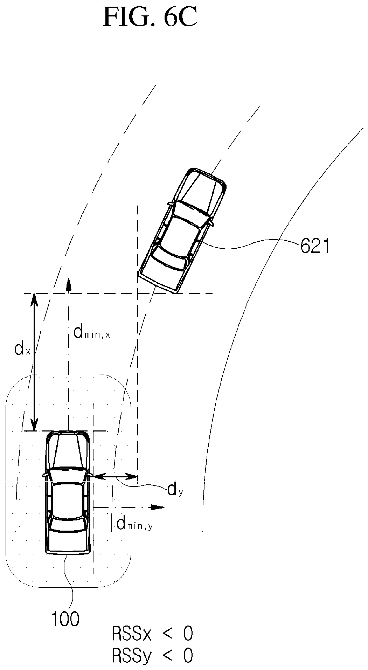

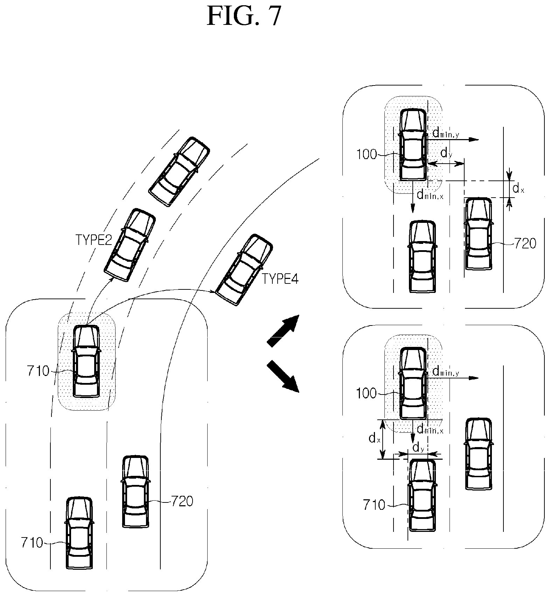

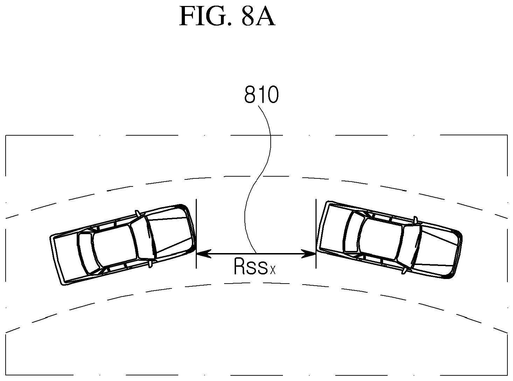

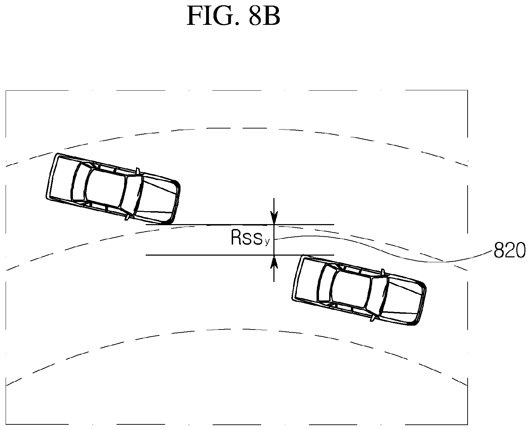

FIG. 1 is a block diagram of an example configuration of a vehicle. In the example configuration of the vehicle as shown in FIG. 1, each component may be configured as one chip, one component, one electronic circuit, a combination of chips, a combination of components, and/or a combination of electronic circuits. Some or all of the components shown in FIG. 1 may be divided into a plurality of components and configured as multiple chips, multiple components, and/or multiple electronic circuits. Some or all components of FIG. 1 may be combined to form one chip, one component, and/or one electronic circuit. One or more of the components shown in FIG. 1 may be omitted or other components not shown in FIG. 1 may be added. At least some of the components of FIG. 1 will be described with reference to the FIGS. 2 to 8. FIG. 2 is a functional block diagram showing an example processor. FIG. 3 shows example minimal risk maneuver (MRM) strategies according to various vehicle states. FIGS. 4A and 4B show examples of determining an MRM strategy based on surrounding environment information within a specified minimum risk condition (MRC) range. FIG. 5 is an example of an order of priority of an MRM strategy changing according to neighboring object information within a specified MRC range. FIGS. 6A, 6B, and 6C are examples of determining a possibility of a host vehicle colliding with a neighboring vehicle due to an MRM of the host vehicle. FIG. 7 is an example of determining an MRM strategy for a host vehicle considering a possibility of colliding with a neighboring vehicle due to an MRM of the host vehicle. FIGS. 8A and 8B are examples of calculating a distance to a neighboring vehicle. A host vehicle may be a vehicle that is operating under autonomous driving controls.

Referring to FIG. 1, the vehicle 100 may include a sensor unit 110, a controller 120, a processor 130, a display 140, a communication apparatus 150, and a memory 160.

The sensor unit 110 may sense an environment around the vehicle 100 using at least one sensor and generate data related to the surrounding environment associated with the vehicle 100 (e.g., the surrounding environment of the vehicle 100) based on the sensing result. The sensor unit 110 may obtain road information, information on objects around the vehicle (e.g., other vehicles, people, objects, curbs, guardrails, lanes, obstacles) and/or position information of the vehicle based on the sensing data obtained from at least one sensor. The road information may include, for example, at least one among lane position, a shape of a lane, a color of a lane, a type of a lane, a quantity of lanes, whether a shoulder exists, or a size of a shoulder. The object around the vehicle may include, for example, at least one among a position of the object, a size of the object, a shape of the object, a distance to the object, and a relative speed to the object.

The sensor unit 110 may include, for example, at least one selected among a camera, a light detection and ranging (LIDAR) sensor, a radio detection and ranging (RADAR) sensor, an ultrasonic sensor, an infrared sensor, and a position measurement sensor. The listed sensors are merely examples for helping understanding, and the sensors included in the sensor unit 110 of the present disclosure are not limited thereto. A camera may generate image data which includes an object positioned in front, at a rear and on a side of the vehicle 100, by capturing image around the vehicle. The lidar may generate information on an object positioned in front, on a rear side and/or on a side of the vehicle 100 using light (or laser). The radar may generate information on an object positioned in front, on a rear side and/or on a side of the vehicle 100 using electromagnetic waves (or radio waves). The ultrasonic sensor may generate information on an object positioned in front, on a rear side and/or on a side of the vehicle 100 using ultrasonic waves. The infrared sensor may generate information on an object positioned in front, on a rear side and/or on a side of the vehicle 100 using infrared rays. The position measurement sensor may measure the current position of the vehicle 100. The position measurement sensor may include at least one among a Global Positioning System (GPS) sensor, a Differential Global Positioning System (DGPS) sensor and a Global Navigation Satellite System (GNSS) sensor. The position measurement sensor may generate position data of the vehicle based on a signal generated by at least one among a GPS sensor, DGPS sensor and GNSS sensor.

The controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and distance detection function, a lateral control function, a powertrain control function, a safe area detection function, an engine on/off, a power on/off, and a vehicle lock/unlock function.

The controller 120 may control at least one component of the vehicle and/or at least one function of the vehicle for autonomous driving and/or a minimal risk maneuver (MRM) of the vehicle 100 according to the control of the processor 130. For example, for the minimal risk maneuver, the controller 120 may control the operation of at least one function among a steering function, an acceleration function, a deceleration function, a lane change function, a lane detection function, a lateral control function, an obstacle recognition and distance detection function, a powertrain control function, and a safe area detection function.

The processor 130 may control the overall operation of the vehicle 100. The processor 130 may include an electrical control unit (ECU) capable of integrally controlling components in the vehicle 100. For example, the processor 130 may include a central processing unit (CPU) or a micro processing unit (MCU) capable of performing arithmetic processing.

After a specified event is generated, the processor 130 may activate the Automated Driving System (ADS) to control components in the vehicle 100 such that the vehicle performs autonomous driving. The specified event may be generated if autonomous driving of the driver is requested, vehicle control authority from the driver is delegated, or a condition specified by the driver and/or designer is satisfied.

The processor 130 may determine whether normal autonomous driving is possible based on at least one among vehicle state information and surrounding environment information during the autonomous driving. If normal autonomous driving is impossible, the processor 130 may determine an MRM strategy and control the determined MRM strategy to be performed. Here, the MRM strategy may include MRM types.

The processor 130 may include a vehicle state information obtaining unit 1310, a surrounding environment information obtaining unit 1320, an MRM strategy determining unit 1330, a potential MRC zone searching unit 1340, a target MRC zone determining unit 1350, and an MRM controlling unit 1360, as illustrated in FIG. 2.

From the time when ADS is activated, the vehicle state information obtaining unit 1310 may obtain vehicle state information representing whether mechanical and/or electrical faults of components inside the vehicle occur or not, by monitoring mechanical and/or electrical states of components inside the vehicle (e.g., sensors, actuators, and the like). The vehicle state information may include information about mechanical states and/or electrical states of components inside the vehicle. For example, the vehicle state information may include information representing whether functions necessary for autonomous driving can normally operate or not according to mechanical and/or electrical states of components inside the vehicle.

The surrounding environment information obtaining unit 1320 may obtain environment information around the vehicle using the sensor 110 and/or the communication apparatus 150 from the time when the ADS is activated. The surrounding environment information obtaining unit 1320 may include a road information obtaining unit 1321 for obtaining information on a road on which the vehicle is traveling, and a neighboring object information obtaining unit 1322 for detecting an object around the vehicle from the sensor unit 110.

The road information obtaining unit 1321 may obtain road information of a position at which the vehicle is traveling through the sensor unit 110. The road information obtaining unit 1321 may obtain map information from an external device (e.g., another vehicle or a server) through the communication apparatus 150, and obtain road information of a position at which the vehicle is traveling from the map information.

The neighboring object information obtaining unit 1322 may obtain information on objects (e.g., other vehicles, people, objects, curbs, guard rails, lanes, obstacles) around the vehicle through the sensor unit 110. For example, the neighboring object information obtaining unit 1322 may obtain a distance to at least one vehicle positioned on a front-lateral side, on a side, and/or on a rear-lateral side of the vehicle and a relative speed thereto.

The processor 130 may determine whether functions necessary for the autonomous driving are normally operable based on the vehicle state information. Functions necessary for autonomous driving may include, for example, at least one among a lane detection function, a lane change function, a lateral control function, a deceleration (or brake control) function, a powertrain control function, a safe area detection function, an obstacle recognition and distance sensing function. If the normal operation of at least one among the functions necessary for autonomous driving is impossible, the processor 130 may determine that normal autonomous driving is impossible.

The processor 130 may determine whether the vehicle state is suitable for general driving conditions based on the vehicle state information. For example, the processor 130 may determine whether the vehicle's mechanical state information (e.g., tire air pressure information or engine overheat information) is suitable for general driving conditions. If the vehicle state is not suitable for general driving conditions, the processor 130 may determine that normal autonomous driving is impossible. For example, if the vehicle cannot be driven due to tire air pressure or engine overheating, the processor 130 may determine that normal autonomous driving is impossible.

The processor 130 may determine whether an environment around the vehicle is suitable for an operation design domain (ODD) of the autonomous driving based on at least one among the surrounding environment information. The operation design domain may represent a condition for the surrounding environment in which autonomous driving normally operates. The processor 130 may determine that normal autonomous driving is impossible (e.g., not advisable) if the surrounding environment information of the vehicle does not match the operation design domain.

If the normal autonomous driving is impossible, the processor 130 may determine it as a situation in which the MRM to minimize the risk of an accident is needed. The processor 130 may select one strategy among a plurality of the MRM strategies by using the MRM strategy determining unit 1330 in a situation in which it is necessary to perform the MRM. The MRM strategies may include three types, as illustrated in FIG. 3. For example, the MRM strategies may include a traffic lane stop strategy 301 including Type 1 and Type 2, and a shoulder stop strategy 303 including Type 3.

The traffic lane stop strategy 301 may include straight stop 311 of Type 1, and in-lane stop 312 of Type 2. The shoulder stop strategy 303 may include half-shoulder stop 313 of Type 3, and full-shoulder stop 314 of Type 4.

The straight stop 311 of Type 1 is a type of stopping the vehicle using a deceleration control 323 which is a longitudinal deceleration function only, and lateral control is not accompanied. For example, the type of straight stop 311 may be performed if lateral control 321, acceleration control 322, deceleration control 323, lane change 324, and detection of a potential stopping position out of a traffic lane 325 is impossible, and only deceleration (or longitudinal deceleration) is possible. For example, the type of straight stop may be performed in a situation where lane detection is impossible and lateral control is impossible due to a defect of an actuator. Here, detection of a potential stopping position out of traffic lane may be a function for detecting a safe area positioned out of a traffic lane such as a shoulder of a road, or a rest area.

The in-lane stop 312 of Type 2 is a type in which the vehicle stops within a boundary of the lane in which it is traveling. For example, the in-lane stop 312 may mean a type in which the vehicle stops within a boundary of a lane in which the vehicle is traveling through the lateral control 321, and/or the deceleration control 323. The traveling lane may mean a lane in which the vehicle is traveling at a time if it is determined that the MRM is needed. The in-lane stop 312 may be performed in a situation in which at least one function among the acceleration control 322, the lane change 324, or the detection of a potential stopping position out of a traffic lane 325 is impossible.

The half-shoulder stop (also referred to as a partial shoulder stop) 313 of Type 3 is a type of stopping the vehicle in a state in which a portion of the vehicle is positioned on a shoulder of a road. For example, the half-shoulder stop 313 may be a type of stopping of the vehicle after a portion of the vehicle moves into and is positioned on a shoulder (e.g., partially pulls into a shoulder) of a road outside the boundary of the road (or the boundary of the outermost lane) through the lateral control 321, the deceleration control 323, the lane change 324, and/or the detection of a potential stopping position out of a traffic lane 325.

The full-shoulder stop 314 of Type 3 is a type of stopping the vehicle in a state in which the vehicle as a whole is positioned on a shoulder of a road. For example, the full-shoulder stop 314 may be a type of stopping the vehicle such that the vehicle as a whole moves into a shoulder of a road to be positioned on the shoulder of a road outside the boundary of the road through the lateral control 321, the deceleration control 323, the lane change 324, and/or the detection of a potential stopping position out of a traffic lane 325.

The priority of the above-described MRM types can be decided based on a road, the surrounding environment, and fail-operational capability which is a limit to which a vehicle tolerate a failure. For example, a priority of the MRM types corresponding to the shoulder stop strategy 303 may be set to be higher than a priority of the MRM types corresponding to the traffic lane stop strategy 301 so as to minimize danger when stopping the vehicle. Further, a priority of the full-shoulder stop 314 may be set to be higher than a priority of the half-shoulder stop 313, and a priority of the in-lane stop 312 may be set to be higher than a priority of the straight stop 312. That is, the priority of the MRM types may be set to be reduced in the order of the full-shoulder stop 314, the half-shoulder stop 313, the in-lane stop 312, and the straight stop 311.

Referring to FIG. 2 again, the MRM strategy determining unit 1330 may select an MRM strategy based on at least one among the vehicle state information and the surrounding environment information.

The MRM strategy determining unit 1330 may check an MRM type that can be performed among the above-described MRM types based on a function that normally operates and/or a function that cannot normally operate among functions needed for the autonomous driving based on the vehicle status information. For example, if the lateral control function operates normally, it may be determined that all the MRM types, which are the straight stop 311, the in-lane stop 312, the half-shoulder stop 313, and the full-shoulder stop 314 can be performed. As another example, if the lateral control function does not operate normally, the straight stop 311 may be determined to be the MRM type that can be performed.

If there is one MRM type that can be performed based on the vehicle state information, the MRM strategy determining unit 1330 may determine the corresponding MRM type as the MRM strategy. For example, the MRM strategy determining unit 1330 can only perform the straight stop 311 in a situation where the lateral control function does not operate normally, thus the straight stop 311 may be determined to be the MRM strategy. As another example, if a driving lane is not detected due to a sensor defect and/or an external environment, the MRM strategy determining unit 1330 may perform the straight stop 311 only, and accordingly, the straight stop 311 may be determined to be the MRM strategy.

If there are a plurality of MRM types that can be performed based on the vehicle state information, the MRM strategy determining unit 1330 may determine an MRM type that can be performed within a specified MRC range. The specified MRC range may be set and/or changed by operators and/or designers. The specified MRC range may be set differently depending on vehicle performance, a vehicle type, and/or external environmental factors (e.g., weather, time, etc.).

The MRM strategy determining unit 1330 may determine an MRM type that can be performed within the MRC range based on whether a shoulder exists within the specified MRC range. If the shoulder does not exist within the specified MRC range, the MRM strategy determining unit 1330 may determine the in-lane stop 312, or the straight stop 311, as the MRM type that can be performed within the MRC range.

If the shoulder exists within the specified MRC range, the MRM strategy determining unit 1330 may determine the MRM type that can be performed within the MRC range based on a size of the shoulder. If the size of the shoulder within the specified MRC range is greater than or equal to the specified size, the MRM strategy determining unit 1330 may determine the full-shoulder stop 314, the half-shoulder stop 313, the in-lane stop 312, or the straight stop 311 as the MRM types that can be performed within the MRC range. The specified size may be determined based on a size of the vehicle. If the size of the shoulder is smaller than the specified size, the MRM strategy determining unit 1330 may determine the half-shoulder stop 313, the in-lane stop 312, or the straight stop 311 as the MRM types that can be performed within the MRC range.

The MRM strategy determining unit 1330 may select a final MRM strategy in consideration of the priority and/or neighboring object information if there are a plurality of MRM types that can be performed within the specified MRC range.

If there are a plurality of MRM types that can be performed within the specified MRC range, the MRM strategy determining unit 1330 may determine the MRM type having the highest priority as the final MRM strategy among the MRM types that can be performed within the specified MRC range. For example, as illustrated in FIG. 4A, if a width of the shoulder 410 within the specified MRC range 400 is greater than a width of the vehicle 100, the MRM strategy determining unit 1330 may determine the full-shoulder stop 314 having the highest priority as the final MRM strategy among the MRM types that can be performed within the MRC range 400. As another example, as illustrated in FIG. 4B, if a width of the shoulder 420 within the specified MRC range 400 is smaller than a width of the vehicle 100, the MRM strategy determining unit 1330 may determine the half-shoulder stop 313 having the highest priority as the final MRM strategy among the MRM types that can be performed within the specified MRC range 400.

The MRM strategy determining unit 1330 may determine the final MRM strategy by additionally taking into consideration a risk associated with performing the MRM strategy within the specified MRC range. For example, as illustrated in FIG. 5, a case is assumed, in which the shoulder 501 exists within the MRC range 400, but a width of an area adjacent to the vehicle 100 among the areas of the shoulder 501 within the MRC range 400 is greater than a width of the vehicle 100 and a width of the area positioned far from the vehicle 100 is smaller than the width of the vehicle 100. That is, a case in which the shoulder 501 having a gradually decreasing width exists within the MRC range 400 is assumed for description. In this case, the MRM strategy determining unit 1330 may select the full-shoulder stop 314 having the highest priority based on the width of the shoulder 501. However, at the time of performing the full-shoulder stop 314, if there is a risk of a rear-end collision (or a collision) 520 with another vehicle 510, the MRM strategy determining unit 1330 may select the half-shoulder stop 313 having a lower priority than the full-shoulder stop 314 as the final MRM strategy, since the half-shoulder stop 313 does not have a risk of a rear-end collision with another vehicle 510.

If there are a plurality of MRM types that can be performed within the specified MRC range, the MRM strategy determining unit 1330 may select the final MRM strategy in consideration of a possibility of a collision and/or whether there is a liability for an accident. The MRM strategy determining unit 1330 may determine the possibility of a collision with the neighboring vehicles and whether there is a liability for an accident in the event of a collision based on a travel path for each of the MRM types which can be performed within the specified MRC range. With respect to the full-shoulder stop and/or the half-shoulder stop needing a lane change, the MRM strategy determining unit 1330 may determine the possibility of a collision and/or the liability for an accident with a vehicle positioned on a front-lateral side of the vehicle, a vehicle positioned on a side, and/or a vehicle positioned on a rear-lateral side among the neighboring vehicles. With respect to the in-lane type stop that does not need a lane change, the MRM strategy determining unit 1330 may determine the possibility of a collision and/or the liability for an accident with a vehicle positioned on a rear side among the neighboring vehicles.

In order to determine the possibility of a collision with the neighboring vehicles and/or whether there is a liability for an accident, the MRM strategy determining unit 1330 may calculate a safety distance representing a difference between a minimum relative distance and an actual relative distance to the neighboring vehicle based on Responsibility Sensitivity Safety (RSS) model as illustrated in Mathematical Equations 1 and 2, and may determine the possibility of a collision and whether there is liability for an accident based on the calculated safety distance.

$$RSS_x = d_x - d_{min,x}$$

$$RSS_y = d_y - d_{min,y}$$

$$...... \text{ Equation (1)}$$

Here, $RSS_x$ means the longitudinal safety distance, $d_{min,x}$ means the minimum longitudinal relative distance to be maintained to the neighboring vehicle, and $d_x$ means the actual longitudinal relative distance between the own vehicle (also referred to as a host vehicle) and the neighboring vehicle. In addition, $RSS_y$ means the lateral safety distance, $d_{min,y}$ means the minimum lateral relative distance to be maintained to the neighboring vehicle, and $d_y$ means the actual lateral relative distance between the own vehicle and the neighboring vehicle.

The MRM strategy determining unit 1330 may determine that the possibility of colliding with a neighboring vehicle is low (or unlikely to collide) if at least one among the longitudinal safety distance ($RSS_x$) and the lateral safety distance ($RSS_y$) to the neighboring vehicle is a positive number, even though an MRM with a travel path related to the neighboring vehicle is performed. In addition, even if a collision with a neighboring vehicle occurs, the MRM strategy determining unit 1330 may determine that the vehicle has no liability for the accident. For example, as illustrated in FIG. 6A, if the longitudinal safety distance ($RSS_x$) from the vehicle 100 to a right-front vehicle 601 is a negative number, but the lateral safety distance ($RSS_y$) thereto is a positive number, it may be determined that the possibility of colliding with the right-front vehicle 601 is low even if the MRM needing a lane change (e.g., the half-shoulder stop, and/or the full-shoulder stop) is performed, and also, even if the vehicle collides with the right-front vehicle 601, it may be determined that the own vehicle (e.g., the host vehicle) 100 has no liability for the accident. As another example, as illustrated in FIG. 6B, if the lateral safety distance ($RSS_y$) to a front vehicle 611 traveling in the same lane as the own vehicle 100 is a negative number, but the longitudinal safety distance ($RSS_x$) thereto is a positive number, even if the MRM needing a lane change (e.g., the half-shoulder stop, and/or the full- shoulder stop) is performed, it may be determined that the possibility of a collision with the front vehicle 611 is low, and even if the vehicle collides with the front vehicle 611, it may be determined that the own vehicle 100 has no liability for the accident.

The MRM strategy determining unit 1330 may determine that the possibility of colliding with a neighboring vehicle is high (or there is the possibility to collide) if both the longitudinal safety distance ($RSS_x$) and the lateral safety distance ($RSS_y$) to the neighboring vehicle are negative numbers and the MRM having a travel path related to the neighboring vehicle is performed. In addition, if the vehicle collides with the neighboring vehicle, the MRM strategy determining unit 1330 may determine that the own vehicle has the liability for the accident. For example, as illustrated in FIG. 6C, if the longitudinal safety distance ($RSS_x$) and the lateral safety distance ($RSS_y$) from the own vehicle 100 to the right-front vehicle 621 are both negative numbers, it may be determined that the possibility to collide with the right-front vehicle 621 is high if the MRM needing a lane change is performed (e.g., the half-shoulder stop, and/or the full-shoulder stop). In addition, since the lane change of the own vehicle may be the cause of a collision with the right-front vehicle 621, the MRM strategy determining unit 1330 may determine that the accident liability is in the own vehicle if a collision with the right-front vehicle 621 occurs.

The MRM strategy determining unit 1330 may select, as the final MRM, the in-lane stop having a lower priority than the full-shoulder stop and the half-shoulder stop if it is determined that the possibility of collision with a neighboring vehicle is high if the MRM needing a lane change is performed. In this case, the MRM strategy determining unit 1330 may calculate the longitudinal safety distance and the lateral safety distance to the rear vehicle (also referred to as a trailing vehicle) traveling in the same lane as the own vehicle. The MRM strategy determining unit 1330 may determine that if at least one among the longitudinal safety distance and the lateral safety distance to the rear vehicle is a positive number, the possibility of a collision with the rear vehicle is low even if the in-lane stop is performed, and even if the vehicle collides therewith, the liability for the accident is not in the own vehicle, and thus, the MRM strategy determining unit 1330 may select the in-lane stop as the final MRM. For example, as illustrated in FIG. 7, the own vehicle 100 may calculate the longitudinal safety distance and the lateral safety distance to the rear-lateral vehicle 720 to perform the full-shoulder stop of Type 3, which has the highest priority, in a situation needing to perform the MRM. However, if both the longitudinal safety distance and the lateral safety distance to the rear-lateral vehicle 720 are negative numbers, there is a high possibility of colliding with the rear-lateral vehicle 720 due to a lane change needed in performing the full-shoulder stop, and in the event of a collision with the rear-lateral vehicle 720, the own vehicle may have the liability for the collision. Therefore, since both the longitudinal safety distance and the lateral safety distance between the own vehicle 100 and the rear vehicle 710 are positive numbers, the own vehicle 100 may select the in-lane stop of Type 2, which has a lower priority than Type 4, as the final MRM strategy.

The longitudinal safety distance and the lateral safety distance between the own vehicle and the neighboring vehicle may be calculated as in Mathematical Equations 2 and 3 below.

The Mathematical Equation 2 below is an equation for calculating the longitudinal safety distance ($Rss_x$) 810 between the own vehicle Cr and the neighboring vehicle Cf as illustrated in FIG. 8A, and the Mathematical Equation 3 is an equation for calculating the lateral safety distance ($Rss_y$) 820 between the own vehicle Cr and the neighboring vehicle Cf, as illustrated in FIG. 8B.

$$Rss_x = v_{x,r}\rho + \frac{a_{max,accel}\rho^2}{2} + \frac{(v_{x,r} + \rho a_{max,accel})^2}{2a_{min,brake}} - \frac{v_{x,r}^2}{2a_{max,brake}}$$

$$\ldots\ldots \text{Equation (2)}$$

$$Rss_y = \mu + [\frac{2v_{y,r}\rho + a^{lat}{}_{max,accel}\rho^2}{2} + \frac{(v_{y,r} + \rho a^{lat}{}_{max,accel})^2}{2a^{lat}{}_{min,brake}}$$

$$- \left(\frac{2v_{y,f}\rho - a^{lat}{}_{max,accel}\rho^2}{2} \pm \frac{(v_{y,f} - \rho a^{lat}{}_{max,accel})^2}{2a_{max,brake}}\right)]$$

$$\ldots\ldots \text{Equation (3)}$$

Here, $\rho$ may mean the reaction time, $\mu$ may mean the lateral margin, $a_{min,brake}$ may mean the minimum deceleration of the own vehicle, $a_{max,accel}$ may mean the maximum acceleration of the neighboring vehicle, and $a_{max,brake}$ may mean the maximum deceleration of the neighboring vehicle.

To calculate the lateral safety distance and/or the longitudinal safety distance, parameters of Mathematical Equations 2 and 3 may be set as shown in Table 1 below.

Table 1

| Param | Value |
|---|---|
| $\rho$ | 0.5(s) |
| $\mu$ | 0.4(m) |
| $a_{max,brake}$ | 6(m/s$^2$) |
| $a_{min,brake}$ | 8(m/s$^2$) |
| $a_{max,accel}$ | 0(m/s$^2$) |
| $a^{lat}_{min,brake}$ | 4(m/s$^2$) |
| $a^{lat}_{max,accel}$ | 0(m/s$^2$) |

The parameter values of Table 1 are not limited thereto.

The MRM strategy determining unit 1330 may store, in the memory 160, the basis data for which the final MRM strategy is selected if the final MRM strategy is selected. The basis data may include at least one among presence of a shoulder within a specified MRC range, a shoulder size (e.g., length and/or width), a safe distance to a neighboring vehicle, vehicle state information of the own vehicle, and lane detection information. The MRM strategy determining unit 1330 may secure the basis for the selection of the MRM strategy having a low priority by storing the basis data for which the final MRM strategy is selected. For example, the MRM strategy determining unit 1330 may store, in the memory 160, at least one among information representing abnormal operation of the lateral control function, a steering angle, a steering speed, information representing a defect in the lane detection sensor, and sensing values of the lane detection sensor if the straight stop of Type 1 is selected as the final MRM strategy. As another example, the MRM strategy determining unit 1330 may store information on the longitudinal safety distance and the lateral safety distance to at least one neighboring vehicle calculated in the MRM strategy selection process if the in-lane stop of Type 2 is selected as the final MRM strategy, even though there is a shoulder in the specified MRC range.

If there is one MRM type that can be performed based on the vehicle state information, the MRM strategy determining unit 1330 may determine the corresponding MRM type as the MRM strategy. For example, the MRM strategy determining unit 1330 can only perform the straight stop 311 in a situation where the lateral control function does not operate normally, thus the straight stop 311 may be determined to be the MRM strategy. As another example, if a driving lane is not detected due to a sensor defect and/or an external environment, the MRM strategy determining unit 1330 may determine the straight stop 311 to be the MRM strategy.

The processor 130 may control to stop the vehicle according to the final MRM strategy, while controlling to notify other vehicles and/or drivers of information representing that the MRM is underway. The control operation to stop the vehicle may include generating a travel trajectory for stopping the vehicle, and/or the lateral and/or longitudinal control that follows the generated travel trajectory. The processor 130 may control a display 140 to notify the driver that the vehicle is performing the MRM. As another example, the processor 130 may control the communication apparatus 150 to notify the other vehicle that the vehicle is performing the MRM. This is merely an example for helping understanding, and the method for notifying that the MRM is underway will not be limited thereto.

The processor 130 may perform the control operation for stopping the vehicle according to the determined MRM type, and determine whether the MRC is satisfied. The MRC may mean a stopped state in which the vehicle speed is 0. For example, the processor 130 may determine whether the vehicle 100 gets into a stopped state in which the speed of the vehicle 100 is 0 while performing at least one operation according to the determined final MRM type. If the vehicle 100 gets into a state where the speed is 0, the processor 130 may determine that the MRC is satisfied.

If the MRC is satisfied, the processor 130 may end the MRM operation and switch the autonomous driving system (ADS) to a standby mode or an off-state. The processor 130 may control the vehicle control authority to be transferred to the driver (or user) after switching the autonomous driving system (ADS) to the standby mode or off-state.

The processor 130 may set a region of interest (ROI) based on a pre-input information if the determined MRM type is the road shoulder stop type. The region of interest may be associated with one or more candidate locations for a stop for the vehicle. Herein, the term "potential MRC zone" may be used interchangeably with the term "candidate MRC zone." The detailed description thereof is provided below.

The potential MRC zone searching unit 1340 may search for one or more potential MRC zones (PMZs) which is a candidate zone for the shoulder stop within the ROI. The target MRC zone determining unit 1350 may select a target MRC zone (TMZ) among the potential MRC zones (PMZs). The detailed description thereof is provided below.

When or after the target MRC zone (PMZ) is determined, the MRM controlling unit 1360 may control the vehicle to move into the target MCR zone (TMZ). The detailed description thereof is provided below.

Referring to FIG. 1, the display 140 may visually display information related to the vehicle 100. For example, the display 140 may provide various information related to the state of the vehicle 100 to the driver of the vehicle 100 under the control of the processor 130. The various information related to the state of the vehicle may include at least one among information indicating whether various components included in the vehicle and/or at least one function of the vehicle is normally operated, and information indicating the driving state of the vehicle. The driving state of the vehicle may include, for example, at least one among a state in which the vehicle is autonomously driving, a state in which the MRM is activated, a state in which the MRM is completed, and a state in which autonomous driving is ended.

The communication apparatus 150 may communicate with an external device of the vehicle 100. The communication apparatus 150 may receive data from the external device of the vehicle 100 or transmit data to the external device of the vehicle 100 under the control of the processor 130. For example, the communication apparatus 150 may perform communication using a wireless communication protocol or a wired communication protocol.

In FIG. 1 as described above, the controller 120 and the processor 130 have been described as separate components, but the controller 120 and the processor 130 may be integrated into one component.

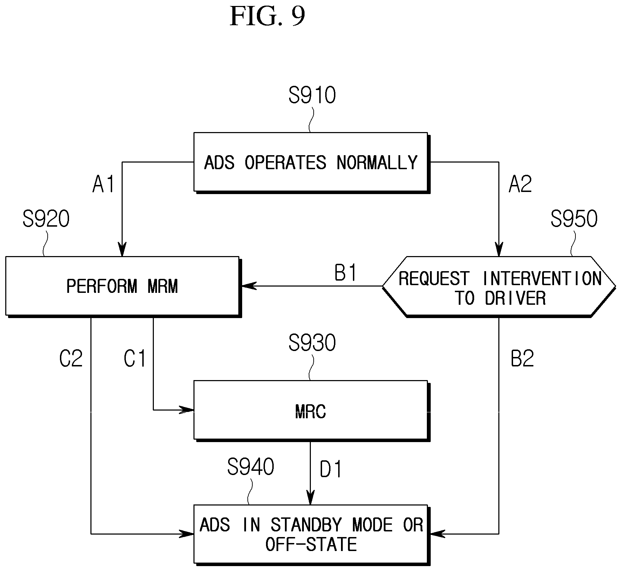

FIG. 9 is a flowchart illustrating an operation of the vehicle. The vehicle of FIG. 9 may be the vehicle 100 of FIG. 1.

Referring to FIG. 9, the vehicle 100 may normally operate the ADS in an operation S910.

The vehicle 100 may monitor the vehicle state and the surrounding environment while performing the autonomous driving according to the normal operation of the ADS. The vehicle 100 may sense whether the MRM is needed based on information obtained by monitoring the vehicle state and the surrounding environment. If the MRM is needed, an event A1 may be generated.

The vehicle 100 may sense whether the driver (or user) intervention is required while performing the autonomous driving according to the normal operation of the ADS. If driver intervention is required, the vehicle 100 may perform a Request To Intervene (RTI) through the ADS or issue a warning. The driver intervention request or warning may be an event A2. The vehicle 100 may proceed to an operation S920 if the event A1 occurs in a state in which the ADS is normally operated.

If the event A2 occurs in a state in which the ADS operates normally, in an operation S950, the vehicle 100 may determine whether the driver intervention is sensed within a specified time. The vehicle 100 may determine that an event B1 has occurred if no driver intervention is sensed within the specified time. If the event B1 occurs, the vehicle 100 may proceed to an operation S920. The vehicle 100 may determine that an event B2 has occurred if the driver intervention is sensed within a specified time. If the event B2 occurs, the vehicle 100 may proceed to an operation S940.

The vehicle 100 may perform the MRM in the operation S920. The vehicle 100 may determine the MRM type based on at least one among the vehicle state information and the surrounding environment information. The surrounding environment information may include information on a road, and information on neighboring vehicles. As illustrated in FIG. 3, the MRM type may include the straight stop 311 of Type 1, the in-lane stop 312 of Type 2, the half-shoulder stop 313 of Type 3, and the full-shoulder stop 314 of Type 3. The vehicle 100 may control at least one component in the vehicle to stop the vehicle according to the determined MRM type. The vehicle 100 may store the basis data used for determining the final MRM type in the memory 160.

In an operation S920, the vehicle 100 may determine whether the minimal risk condition is satisfied as the speed of the vehicle becomes 0 through execution of the MRM. If the minimal risk condition is satisfied, the vehicle 100 may determine that an event C1 has occurred and may proceed to an operation S930. The vehicle 100 may determine whether the driver's intervention is sensed while the MRM is activated. If the driver's intervention is sensed, the vehicle 100 may determine that an event C2 has occurred and may proceed to the operation S940.

In the operation S930, the vehicle 100 may maintain a state in which the minimal risk condition is satisfied. The state in which the minimal risk condition is satisfied may mean a state in which the vehicle is stopped. For example, the vehicle 100 may maintain a stopped state. For example, the vehicle 100 may perform control operation for maintaining the vehicle in a stopped state regardless of an inclination of a road surface of the stopped position. The vehicle 100 may determine whether an event D1 occurs while maintaining a state in which the minimal risk condition is satisfied. The event D1 may include at least one among ADS being turned off by the driver, and completion to transfer the vehicle control authority to the driver. If the event D1 occurs, the vehicle 100 may proceed to the operation S940.

The vehicle 100 may switch the ADS into a standby mode or an off-state in the operation S940. The vehicle 100 may not perform operation for the autonomous driving while the ADS is in a standby mode or an off-state.

The operations S910, S920, S930, and S950 described above may be in a state in which the ADS is activated, and the operation S940 may be in a state in which the ADS is inactive.

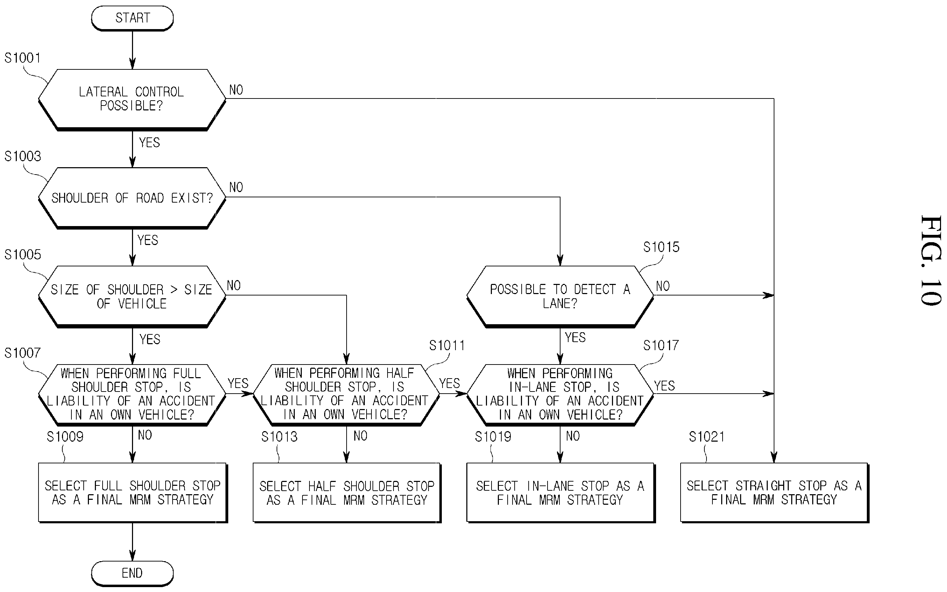

FIG. 10 is a flowchart illustrating determination of the MRM strategy by the vehicle. The operations of FIG. 10 may be the detailed operations of the operation S920 of FIG. 9. Each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120.

Referring to FIG. 10, the vehicle 100 may determine whether the lateral control is possible based on the vehicle state information, in an operation S1001. For example, the vehicle 100 may obtain vehicle state information representing whether mechanical and/or electrical faults of components inside the vehicle occur or not, by monitoring mechanical and/or electrical states of components inside the vehicle (e.g., sensors, actuators, and the like). The vehicle 100 may determine whether the lateral control (or steering control) of the vehicle 100 is possible based on the vehicle state information representing mechanical states and/or electrical states of sensors and/or the actuator.

If the lateral control is impossible, the vehicle 100 may select the straight stop as the final MRM strategy in an operation S1021. For example, as illustrated in FIG. 3, since the vehicle 100 incapable of the lateral control may only perform the straight stop, the vehicle 100 may determine the straight stop as the final MRM strategy.

If the lateral control is possible, the vehicle 100 may determine whether a shoulder of a road exists within the MRC range in an operation S1003. For example, the vehicle 100 may determine whether a shoulder exists by checking road information within an MRC range corresponding to being within a specified distance centering on the own vehicle 100. The road information within the MRC range may be obtained from sensing data of sensors (e.g., the sensor unit 110) provided in the vehicle 100, or from map information obtained through the communication apparatus 150.

If there is no shoulder, the vehicle 100 may determine whether lane detection is possible in an operation S1015. For example, since the vehicle 100 cannot perform the road shoulder stop strategy in a situation where a shoulder of a road does not exist, the vehicle 100 may check whether lane detection is possible in order to determine whether the in-lane stop is possible. The vehicle 100 may determine whether lane detection is possible or whether lane detection is impossible, based on the sensing value of the lane detection sensor.

If lane detection is impossible, the vehicle 100 may select the straight stop as the final MRM strategy in the operation S1021. For example, if it is impossible to detect a lane, the vehicle 100 may determine that the in-lane stop cannot be performed, and may determine the straight stop as the final MRM strategy.

If the lane detection is possible, the vehicle 100 may determine whether liability for an accident is in the own vehicle during deployment (or fulfillment) of the in-lane stop in an operation 1017. For example, the vehicle 100 may calculate a safety distance to the rear vehicle, and determine the possibility of a collision with the rear vehicle and whether to be liable for an accident based on the calculated safety distance. The rear vehicle may mean a vehicle traveling in the same lane as the own vehicle. The safety distance to the rear vehicle may include the longitudinal safety distance and the lateral safety distance as illustrated in the Mathematical Equation 1. If the calculated longitudinal safety distance and the lateral safety distance are both negative numbers, the vehicle 100 is highly likely to collide with the rear vehicle while performing the in-lane stop, and if a collision with the rear vehicle occurs, it may be determined that the liability for the accident is in the own vehicle. If at least one among the calculated longitudinal safety distance and the lateral safety distance is a positive number, the vehicle 100 is unlikely to collide with the rear vehicle during fulfillment of the in-lane stop, and if a collision with the rear vehicle occurs, it may be determined that no liability for the accident is in the own vehicle.

If it is determined that the liability for the accident is in the own vehicle during fulfillment of the in-lane stop, the vehicle 100 may proceed to the operation S1021 and select the straight stop as the final MRM strategy.

If it is determined that liability for the accident is not in the own vehicle during fulfillment of the in-lane stop, the vehicle 100 may select the in-lane stop as the final MRM strategy in an operation S1019.

If a road shoulder exists as a result of the check in the operation S1003, the vehicle 100 may determine whether a size of the shoulder is greater than a size of the vehicle in an operation S1005. For example, the vehicle 100 may compare a width of the shoulder to a width of the vehicle to determine whether the vehicle can perform the full-shoulder stop or the half-shoulder stop.

If the size of the shoulder is greater than the size of the vehicle, the vehicle 100 may determine that the full-shoulder stop is possible, and the vehicle may determine whether the liability for the accident is in the own vehicle if the full-shoulder stop is performed in an operation 1007. For example, the vehicle 100 may calculate a travel path for fulfillment of the full-shoulder stop, and may calculate a safety distance to at least one neighboring vehicle related to the calculated travel path. The at least one neighboring vehicle related to the travel path for the full-shoulder stop fulfillment may include at least one among a vehicle on a front-lateral side, a side vehicle, and/or a vehicle on a rear-lateral side. The vehicle 100 may determine the possibility of a collision with at least one neighboring vehicle and whether to be liable for the accident based on the calculated safety distance. The safety distance to at least one neighboring vehicle may include the longitudinal safety distance and the lateral safety distance as shown in the Mathematical Equation 1. If the calculated longitudinal safety distance and lateral safety distance are both negative numbers, the vehicle 100 is highly likely to collide with at least one neighboring vehicle when the full-shoulder stop is performed, and may determine that the liability for the accident is in the own vehicle if a collision with the vehicle occurs. If at least one among the calculated longitudinal safety distance and the lateral safety distance is a positive number, the vehicle 100 may determine that the possibility of the vehicle 100 to collide with at least one neighboring vehicle during fulfillment of the full-shoulder stop is low, and the liability for the accident if a collision with the vehicle occurs is not in the own vehicle.

If it is determined that the liability for the accident is not in the own vehicle during fulfillment of the full-shoulder stop, the vehicle 100 may select the full-shoulder stop as the final MRM strategy in an operation S1009.

If it is determined that the liability for the accident is in the own vehicle when the full-shoulder stop is performed, the vehicle 100 may proceed to an operation S1011 to determine whether the liability for the accident is in the own vehicle if the half-shoulder stop is performed. For example, the vehicle 100 may calculate a travel path for fulfillment of the half-shoulder stop, and may calculate a safety distance to at least one neighboring vehicle related to the calculated travel path. The at least one neighboring vehicle related to the travel path for fulfillment of the half-shoulder stop may include at least one among a vehicle on a front-lateral side, a side vehicle, and/or a vehicle on a rear-lateral side. The vehicle 100 may determine the possibility of a collision with at least one neighboring vehicle and whether to be liable for the accident based on the calculated safety distance. The safety distance to at least one neighboring vehicle may include the longitudinal safety distance and the lateral safety distance as shown in the Mathematical Equation 1. If the calculated longitudinal safety distance and lateral safety distance are both negative numbers, the vehicle 100 is highly likely to collide with at least one neighboring vehicle when the half-shoulder stop is performed, and may determine that the liability for the accident is in the own vehicle if a collision with the vehicle occurs. If at least one among the calculated longitudinal safety distance and lateral safety distance is a positive number, the vehicle 100 may determine that the possibility of the vehicle 100 to collide with at least one neighboring vehicle during fulfillment of the half-shoulder stop is low, and that the liability for the accident if a collision with the vehicle occurs is not in the own vehicle.

If it is determined that the liability for the accident is not in the own vehicle during fulfillment of the half-shoulder stop, the vehicle 100 may select the half-shoulder stop as the final MRM strategy in an operation S1013.

If it is determined that the liability for the accident is in the own vehicle when the half-shoulder stop is performed, the vehicle 100 may proceed to an operation S1017.

If the vehicle detects a situation in which normal autonomous driving is impossible during the autonomous driving, the vehicle may determine the MRM strategy in consideration of liability for an accident per MRM type based on the vehicle state information and/or surrounding environment information, thereby safety can be improved while minimizing the risk of the vehicle.

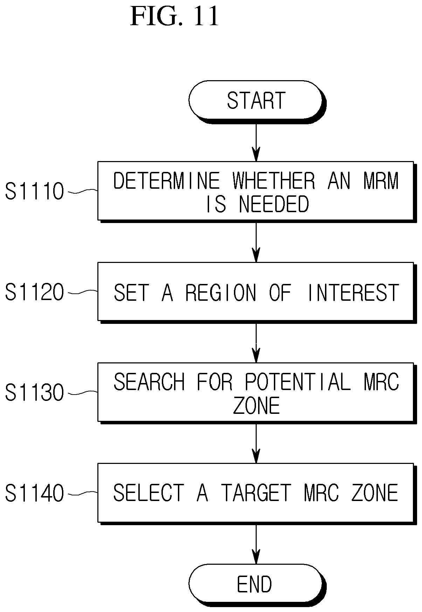

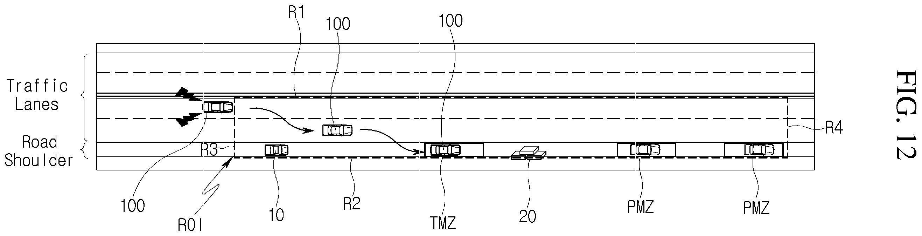

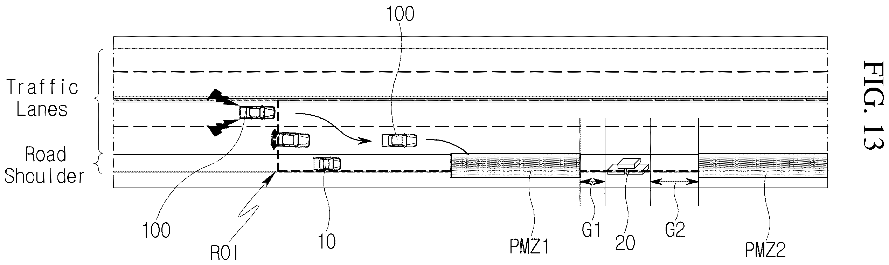

FIG. 11 is a flowchart illustrating operations for searching for the potential MRC zone and selecting the target MRC zone during autonomous driving. FIGS. 12 and 13 are views for describing the region of interest (ROI), the potential MRC zone (PMZ), and the target MRC zone (TMZ). The vehicle described in FIGS. 11 to 13 may be the vehicle 100 of FIG. 1.

Referring to FIG. 11, in an operation S1110, the processor 130 may determine whether the MRM is needed based on at least one among the surrounding environment information and the vehicle state information during the autonomous driving of the vehicle 100, and determine the MRM type if it is determined that the MRM is needed.

In an operation S1120, the processor 130 may set the region of interest (ROI) based on the pre-input information, if the MRM type is the road shoulder stop type.

The road shoulder stop type is an example, and the MRM type may be the half-shoulder stop 313 of Type 3, or the full-shoulder stop 314 type.

Referring to FIG. 12, as an example, the region of interest (ROI) may have a rectangular shape including an upper side R1, a lower side R2, a left side R3, and a right side R4, the upper side R1 may have a length from one point of a front part (e.g., a hood, a front bumper, a headlamp, etc.) of the vehicle 100 to a position spaced a predetermined first distance apart, the lower side R2 may have the same length as the upper side R1, the left side R3 may have a length from one point of a center line to boundary of a shoulder, and the right side R4 may have the same length as the left side R3. One point of an edge of the front part of the vehicle 100 may be a starting point of the upper side R1, and one point obtained by adding a predetermined first distance to the starting point may be an end point. One point of a center line may be a starting point of the left side R3, and one point of an outer boundary of the line of the shoulder may be an end point of the left side R3. The left side R3 may have a length from one point of a line near an outermost line (e.g., a center line) in a traffic lane in which the vehicle 100 travels to a line of a shoulder (or an outer boundary of the line of the shoulder) away from the outermost line (e.g., a center line) among lines of a shoulder. One point of the outermost line (e.g., a center line) of the traffic lane in which the vehicle 100 travels may be a starting point of the left side R3, and one point of an outer boundary of the line of the shoulder may be an end point of the left side R3. The ROI may have a rectangular shape, but is not limited thereto.

The ROI may be a region in which search for the potential MRC zone (PMZ) is performed, and may be a region which does not change even if there occurs position change according to a motion of the vehicle, change in a state of the vehicle, and change in an environment. That is, the ROI may be fixed as an initially set region, even if the vehicle 100 continues moving, and search for the potential MRC zone (PMZ) and selection of the target MRC zone (TMZ) may be performed only within the fixed ROI. Based on the ROI, generation of the potential MRC zone (PMZ) and the target MRC zone (TMZ), and a fail response may be performed.

The processor 130 may search for the potential MRC zone (PMZ), which is a candidate MRC zone, within the ROI in an operation S1130. Herein, the term "potential MRC zone" may be used interchangeably with the term "candidate MRC zone." The processor 130 may search for the potential MRC zone (PMZ) based on prestored map information (e.g., map information stored in the vehicle), the surrounding environment information, and traffic information, using algorithm (e.g.,

algorithm or logic stored in the vehicle).

Referring to FIGS. 12 and 13, the processor 130 may determine (or search for), within the region of interest (ROI), a zone where the vehicle can stop by deaccelerating and moving to a different lane from current location of the vehicle, is unoccupied by an obstacle, and is larger than a predetermined reference size, as the potential MRC zone (PMZ). The processor 130 may determine whether a specific zone within the region of interest (ROI) corresponds to a location where the vehicle can stop by deaccelerating and moving to a different lane from current location of the vehicle, based on prestored map information, as a process for searching for the potential MRC zone (PMZ). For example, if the location of the specific zone within the region of interest (ROI) is a shoulder location based on prestored map information (e.g., map information stored in the vehicle), the processor 130 may determine whether an obstacle occupies the specific zone and whether the size of the specific zone is larger than a predetermined reference size.

The processor 130 may determine whether an obstacle (e.g., another vehicle, a person, an animal, an object, etc.) occupies the specific zone within the region of interest (ROI), based on the surrounding environment information and/or traffic information, as a process for searching for the potential MRC zone (PMZ). If the specific zone within the region of interest (ROI) is not occupied by an obstacle, the processor 130 may determine whether a specific zone within the region of interest (ROI) corresponds to a location where the vehicle can stop by deaccelerating and moving to a different lane from current location of the vehicle, and whether the size of the specific zone is larger than a predetermined reference size.

If the size of the specific zone (where the vehicle can stop by deaccelerating and moving to a different lane from current location of the vehicle and is unoccupied by an obstacle) is larger than a predetermined reference size, the processor 130 may determine the specific zone as the potential MRC zone (PMZ).

The potential MRC zone (PMZ) does not mean a spot, but an empty space in which the vehicle may stop in an area of the shoulder within the ROI, and may mean an area in which the vehicle decelerates to move into the shoulder to stop in the shoulder, or an area in which a posture of the vehicle (e.g., parallel stop) is aligned. The processor 130 may search for a single or a plurality of potential MRC zones (PMZ).

The processor 130 may search for the potential MRC zone (PMZ) for a predetermined time (e.g., 1 second). A situation where the MRM is triggered corresponds to a dangerous situation in which the autonomous driving cannot continue, therefore, search for the potential MRC zone (PMZ) must be completed within a short period of time.

The processor 130 may continue searching for the potential MRC zone (PMZ) as a background task (e.g., while performing one or more other tasks), even after the search for the potential MRC zone (PMZ) is completed. By doing so, if selection of the target MRC zone (PMZ) fails, re-search (e.g., an additional search) for the potential MRC zone (PMZ) may be quickly performed.

The potential MRC zone (PMZ) may have a plurality of candidate MRC zones, and each of the candidate MRC zone may have a different size.

The processor 130 may set a size of the potential MRC zone (PMZ) in consideration of the traffic information of the shoulder or the traffic lane.

The processor 130 may search for the potential MRC zone (PMZ) spaced a certain distance apart from the current position of the vehicle 100, if it is determined that lane change is not easy because of a neighboring vehicle.

A gap zone may be formed between a candidate MRC zone near (e.g., adjacent to) an obstacle among the plurality of candidate MRC zones and the obstacle. The potential MRC zone (PMZ) is an area unoccupied by an obstacle, and a gap zone for safety against an obstacle may be formed therein.

Referring to FIG. 13, based on an obstacle 20 positioned on a shoulder of a road, the potential MRC zone (PMZ) may include a first candidate MRC zone (PMZ1) positioned in front of the obstacle 20 which is in a direction in which the vehicle 100 approaches (e.g., positioned closer to the vehicle 100 than the obstacle 20) and a second candidate MRC zone (PMZ2) positioned at a rear of the obstacle 20 which is in a direction in which the vehicle 100 becomes away therefrom (e.g., positioned farther away from the vehicle 100 than the obstacle 20). A first gap zone (G1) may be formed between the first candidate MRC zone (PMZ1) and the obstacle 20, and a second gap zone (G2) may be formed between the obstacle 20 and the second candidate MRC zone (PMZ2).

The second gap zone (G2) may be greater (e.g., in length or size) than the first gap zone (G1). In case of the first gap zone (G1), the vehicle 100 which already has moved into the shoulder approaches the obstacle 20, and therefore, a greater gap zone is not needed. However, in case of the second gap zone (G2) at a rear of the obstacle 20, the vehicle 100 moves into the lane of the shoulder while avoiding the obstacle 20, and the risk of a collision is high in this case, therefore, a relatively greater gap zone than the first gap zone (G1) may be needed.

In an operation S 1140, the processor 130 may select a target MRC zone (TMZ) among the potential MRC zones (PMZ). Using prestored algorithm, the processor 130 may select the target MRC zone (TMZ) among the potential MRC zones (PMZ) based on at least one among information on a size of the potential MRC zone (PMZ)(e.g., information on longitudinal and lateral lengths), information on a distance (e.g., from the vehicle) to the potential MRC zone (PMZ) and information on a moving path to the potential MRC zone (PMZ), information on a state of the vehicle 100 (e.g., information on the current state of the vehicle (e.g., severity of a defect) and information on the maximum distance by which the vehicle may move considering the future state of the vehicle), information on the number of lane changes needed (e.g., required) for arriving at (e.g., moving to) the potential MRC zone (PMZ), surrounding environment information (e.g., information on topography around the potential MRC zone (PMZ), information having an effect on the safety at the time of stop such as information on a branched lane and an intersection), and traffic information (e.g., information on a traffic state of a moving path to the potential MRC zone (PMZ)(e.g., information on a heavy traffic congestion and the like)).

When or after a plurality of potential MRC zones (PMZ) are calculated, the processor 130 may determine an optimized potential MRC zone (PMZ) among the plurality of potential MRC zones (PMZ) to be the target MRC zone (TMZ) based on at least one among information on a size of the potential MRC zone (PMZ), information on a distance to the potential MRC zone (PMZ) and information on a moving path to the potential MRC zone (PMZ), information on a state of the vehicle 100, information on the number of lane change, surrounding environment information, and traffic information, using prestored algorithm. The above-described determination of the target MRC zone (TMZ) among the potential MRC zone (PMZ) is an example, and the determination thereof is not limited thereto.

In the operation S1140, the processor 130 may control the vehicle 100 to move into the target MRC zone (TMZ) if the target MRC zone (TMZ) is determined. When or after the target MRC zone (TMZ) is determined, the processor 130 may perform control of acceleration, deceleration, lane change and the like so that the vehicle 100 moves into the determined target MRC zone (TMZ).

FIG. 13 is a flowchart illustrating operations for searching for a potential MRC zone and determining a target MRC zone at the time of shoulder stop during the autonomous driving. The vehicle described in FIG. 13 may be the vehicle 100 of FIG. 1.

Referring to FIG. 13, the processor 130 may change the MRM type if the potential MRC zone (PMZ) is not found within the ROI. The processor 130 may determine whether the in-lane stop of Type 2 is possible, and may perform the in-lane stop if the in-lane stop is possible. If the in-lane stop is impossible, the processor 130 may determine whether the straight stop of Type 1 is possible, and if the straight stop is possible, the processor 130 may perform the straight stop. The processor 130 activate a Fail mitigation system (FMS) if the straight stop is impossible.

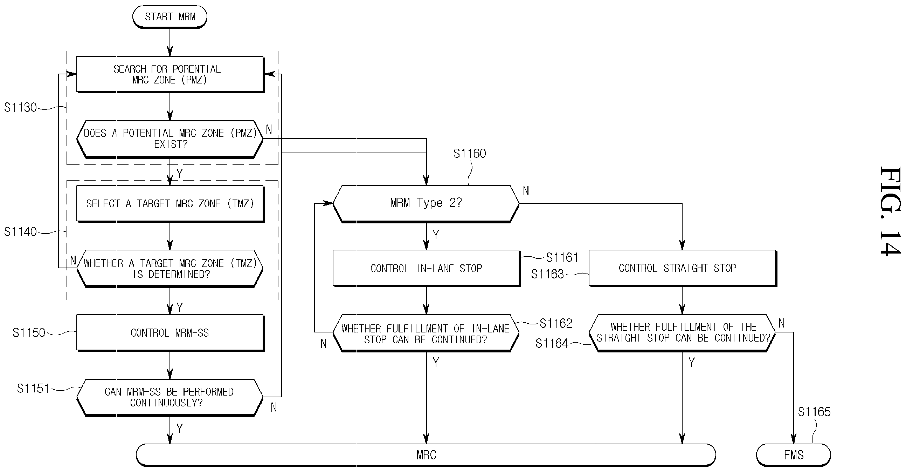

FIG. 14 is a flowchart illustrating operations for searching for a potential MRC zone and determining a target MRC zone at the time of shoulder stop during the autonomous driving.

Referring to FIG. 14, the processor 130 may re-search (e.g., perform an additional search) for a potential MRC zone (PMZ) if a target MRC zone (TMZ) is not determined among the potential MRC zones (PMZ).

The processor 130 may end re-search (e.g., terminate the additional search) for the potential MRC zone (PMZ) if a predetermined condition set to prevent repeat of re-search for the potential MRC zone (PMZ) is satisfied (e.g., a predetermined allowable number of re-search is exceeded, a predetermined allowable time of re-search is exceeded, coming close to a boundary of the ROI, or deviating from a boundary of the ROI).

The processor 130 may determine whether the shoulder stop of the MRM (minimal risk maneuver), that is, the MRM-SS, can be performed continuously in an operation S1151.

The processor 130 may determine that the MRM-SS cannot be performed continuously if stopping or a movement of the vehicle 100 is impossible. The processor 130 may determine that the vehicle stopping is impossible if it is determined that the target MRC zone (TMZ) is a wrong position to stop the vehicle 100 (e.g., such as a case where other vehicle is stopped in the position) while performing the MRM-SS. The processor 130 may determine that movement is impossible if one or more components of the vehicle 100 are inoperable while performing the MRM-SS. (e.g., a malfunction)

The processor 130 may re-search (e.g., perform an additional search) for the potential MRC zone (PMZ) or change the MRM type if the vehicle 100 cannot stop in or move into the target MRC zone (TMZ).

The processor 130 may re-search (e.g., perform an additional search) for a potential MRC zone (PMZ), if the vehicle 100 cannot stop in the target MRC zone (TMZ) while moving into the target MRC zone (TMZ) (e.g., another vehicle is stopped in the target MRC zone (TMZ)). If a new target MRC zone (TMZ) is determined, the processor 130 may control the vehicle 100 to move into the new target MRC zone (TMZ).

If the vehicle 100 cannot move while moving into the target MRC zone (TMZ) (e.g., a malfunction occurs in the vehicle), the processor 130 may change the MRM type.

If it is possible to continue the MRM-SS (vehicle stopping in or movement into the target MRC zone (TMZ) is possible), the vehicle 100 may determine that the minimal risk condition (MRC) is satisfied.

In an operation S1160, the processor 130 may determine whether the in-lane stop of Type 2 is possible based on the vehicle state information. The processor 130 may determine whether the in-lane stop of Type 2 is possible based on the functions normally operate and/or functions impossible to normally operate among the functions needed for the autonomous driving.

In an operation S1161, the processor 130 may perform the in-lane stop if the in-lane stop is possible.

In an operation S1162, the processor 130 may determine whether fulfillment of the in-lane stop can be continued. The processor 130 may determine that fulfillment of the in-lane stop cannot be continued if the stopping or movement of the vehicle 100 is impossible.

The processor 130 may change the MRM type if it is determined that fulfillment of the in-lane stop cannot be continued.

The processor 130 may determine that the MRC is satisfied if fulfillment of the in-lane stop can be continued (e.g., if stopping or movement of the vehicle is possible).

In an operation S1163, if the in-lane stop is impossible, the processor 130 may determine whether the straight stop of Type 1 is possible based on the functions normally operate and/or the functions impossible to normally operate among the functions needed for the autonomous driving.

If the straight stop is possible, the processor 130 may perform the straight stop.

The processor 130 may activate the Fail mitigation system, if the straight stop is impossible.

In an operation S1164, the processor 130 may determine whether fulfillment of the straight stop can be continued. If the stopping or movement of the vehicle 100 is impossible, the processor 130 may determine that the fulfillment of the straight stop cannot be continued.

The processor 130 may activate the Fail mitigation system if it is determined that fulfillment of the straight stop cannot be continued.

The processor 130 may determine that the MRC is satisfied if fulfillment of the straight stop can be continued (stopping or movement is possible).

An autonomous driving vehicle may include: at least one sensor configured to detect a surrounding environment of the vehicle and to generate surrounding environment information; a processor configured to monitor a state of the vehicle to generate vehicle state information and to determine whether a minimal risk maneuver is needed based on at least one among the surrounding environment information or the vehicle state information during an autonomous driving of the vehicle; and a controller configured to control operation of the vehicle according to control of the processor, and the processor may be configured to set a region of interest when it is determined that the minimal risk maneuver is needed and a shoulder stop type is determined to be a type of the minimal risk maneuver; to search a potential MRC zone which is a candidate MRC zone for shoulder stop within the region of interest; and to select a target MRC zone in which the vehicle is to be stopped among the potential MRC zones.

The region of interest may have a rectangular shape including an upper side, a lower side, a left side, and a right side, the upper side may have a length from one point of a front part of the vehicle to a position spaced a predetermined first distance apart therefrom, and the left side may have a length from one point of a center line to boundary of a shoulder.

The processor may search the potential MRC zone based on at least one among prestored map information, the surrounding environment information, and traffic information.

The processor may determine, within the region of interest, a zone where the vehicle can stop by deaccelerating and moving to a different lane from current location of the vehicle, is unoccupied by an obstacle, and is larger than a predetermined reference size, as the potential MRC zone.

The processor may search the potential MRC zone for a predetermined time.

The processor may continue the search of the potential MRC zone in a background after the search of the potential MRC zone is completed.

The potential MRC zone may include a plurality of candidate MRC zones, and each of the candidate MRC zones may have a different size.

A gap zone may be formed between a candidate MRC zone near an obstacle among the plurality of candidate MRC zones and the obstacle.

The potential MRC zone may include, based on an obstacle positioned in a shoulder of a road, a first candidate MRC zone positioned in a forward direction of the obstacle which is a direction in which the vehicle approaches, and a second candidate MCR zone positioned in a rearward direction of the obstacle which is a direction away from the vehicle based on the obstacle, a first gap zone may be formed between the first candidate MRC zone and the obstacle, and a second gap zone may be formed between the obstacle and the second candidate MRC zone.

The second gap zone may be greater than the first gap zone.

The processor may select the target MRC zone among the potential MRC zones based on at least one among information on a size of the potential MRC zone, information on a distance to the potential MRC zone and information on a moving path to the potential MRC zone, information on the vehicle state, information on a number of lane change, the surrounding environment information, and traffic information.

The processor may control the vehicle to move into the target MRC zone when the target MRC zone is selected.

A method for operating an autonomous driving vehicle may include: setting a region of interest when it is determined that a minimal risk maneuver is needed based on at least one among surrounding environment information or vehicle state information during an autonomous driving of the vehicle and a shoulder stop type is determined to be a type of the minimal risk maneuver; searching a potential MRC zone which is a candidate MRC zone for shoulder stop within the region of interest; and selecting a target MRC zone in which the vehicle is to be stopped among the potential MRC zones.

The searching a potential MRC zone may include searching the potential MRC zone based on at least one among prestored map information, the surrounding environment information, and traffic information.

The searching a potential MRC zone may include determining, within the region of interest, a zone where the vehicle can stop by deaccelerating and moving to a different lane from current location of the vehicle, is unoccupied by an obstacle and is larger than a predetermined reference size, as the potential MRC zone.

The searching a potential MRC zone may include searching the potential MRC zone for a predetermined time.

The searching a potential MRC zone may include continuing the search of the potential MRC zone in a background after the search of the potential MRC zone is completed.

The selecting a target MRC zone may include selecting the target MRC zone among the potential MRC zones based on at least one among information on a size of the potential MRC zone, information on a distance to the potential MRC zone and information on a moving path to the potential MRC zone, information on the vehicle state, information on a number of lane change, the surrounding environment information, and traffic information.

The method may further include: controlling the vehicle to move into the target MRC zone when the target MRC zone is selected.

As described above, according to various example embodiments of the present disclosure, it is possible to quickly search a shoulder of a road, and to determine an optimized position for the shoulder stop.

As described above, according to various example embodiments of the present disclosure, when search and determination of a position for the shoulder stop fails, it is possible to respond to the failure quickly through a re-search process or an MRM type change process.

**Claims**

1.  A vehicle comprising:

    at least one sensor configured to detect a surrounding environment associated with the vehicle;
    a controller configured to control one or more operations of the vehicle; and
    a processor configured to:

    generate, based on the surrounding environment detected by the at least one sensor, surrounding environment information;
    monitor a state of the vehicle to generate vehicle state information;
    determine, based on at least one of the surrounding environment information or the vehicle state information during an autonomous driving operation of the vehicle, whether to perform a minimal risk maneuver;
    set, based on a determination to perform the minimal risk maneuver and based on a type of the minimal risk maneuver being a shoulder stop, a region of interest comprising a shoulder of a road;
    search, within the region of interest, for one or more candidate minimum risk condition (MRC) zones for the shoulder stop;
    select, among the one or more candidate MRC zones, a target MRC zone; and
    control, via the controller, the vehicle to stop in the target MRC zone.

2.  The vehicle of claim 1, wherein the region of interest has a rectangular shape comprising four sides,

    wherein one of the four sides has a predetermined length and extends from one point of a lateral line that passes a front part of the vehicle in a longitudinal direction of the vehicle, and
    wherein another one of the four sides extends from one point of a center line of the road and ends at a boundary of the shoulder.

3.  The vehicle of claim 1, wherein the processor is configured to search for the one or more candidate MRC zones by: searching for the one or more candidate MRC zones based on at least one of: map information stored in the vehicle, the surrounding environment information, or traffic information.

4.  The vehicle of claim 1, wherein the processor is configured to search for the one or more candidate MRC zones by: searching, within the region of interest, for one or more zones for the vehicle to stop in by deaccelerating and moving to a different lane from a current location of the vehicle, wherein the one or more zones are unoccupied by an obstacle, and wherein the one or more zones are larger than a predetermined reference size.

5.  The vehicle of claim 1, wherein the processor is configured to search for the one or more candidate MRC zones by: searching for the one or more candidate MRC zones for a predetermined time.

6.  The vehicle of claim 1, wherein the processor is further configured to:

after a search for the one or more candidate MRC zones is complete, search for one or more additional candidate MRC zones.

7. The vehicle of claim 1, wherein at least two of the one or more candidate MRC zones have different sizes.

8. The vehicle of claim 7, wherein a gap zone is formed between a candidate MRC zone, of the one or more candidate MRC zones, and an obstacle.

9. The vehicle of claim 1, wherein the one or more candidate MRC zones comprise:

   a first candidate MRC zone that is positioned closer to the vehicle than an obstacle on the shoulder, and
   a second candidate MRC zone that is positioned farther away from the vehicle than the obstacle,
   wherein a first gap zone is formed between the first candidate MRC zone and the obstacle, and
   wherein a second gap zone is formed between the obstacle and the second candidate MRC zone.

10. The vehicle of claim 9, wherein the second gap zone is greater in length than the first gap zone.

11. The vehicle of claim 1, wherein the processor is configured to select the target MRC zone by:
   selecting the target MRC zone based on at least one of: a size of each of the one or more candidate MRC zones, a distance from the vehicle to each of the one or more candidate MRC zones, a moving path from the vehicle to each of the one or more candidate MRC zones, the vehicle state information, a number of lane changes required for the vehicle to move to each of the one or more candidate MRC zones, the surrounding environment information, or traffic information.

12. The vehicle of claim 1, wherein the processor is further configured to control, via the controller, the vehicle to, based on the target MRC zone being selected, move into the target MRC zone.

13. A method performed by an apparatus of a vehicle, the method comprising:

   determining, based on at least one of surrounding environment information or vehicle state information during an autonomous driving operation of the vehicle, whether to perform a minimal risk maneuver;
   setting, based on a determination to perform the minimal risk maneuver and based on a type of the minimal risk maneuver being a shoulder stop, a region of interest comprising a shoulder of a road;
   searching, within the region of interest, for one or more candidate minimum risk condition (MRC) zones for the shoulder stop;
   selecting, among the one or more candidate MRC zones, a target MRC zone; and
   controlling the vehicle to stop in the target MRC zone.

14. The method of claim 13, wherein the searching for the one or more candidate MRC zones comprises:
   searching for the one or more candidate MRC zones based on at least one of: map information stored in the vehicle, the surrounding environment information, or traffic information.

15. A vehicle comprising:

   at least one sensor configured to detect at least one object on a road;
   a controller configured to control, during an autonomous driving operation of the vehicle, a movement of the vehicle that is travelling on the road; and
   a processor configured to:

      generate, based on the detected at least one object on the road, sensing information;
      generate vehicle state information indicating a state of the vehicle;
      during the autonomous driving operation of the vehicle, determine, based on at least one of the sensing information or the vehicle state information, to perform a minimal risk maneuver;
      set, based on the determination to perform the minimal risk maneuver, a region of interest comprising a shoulder of the road;
      based on the at least one object, determine, within the region of interest, one or more candidate minimum risk condition (MRC) zones for a shoulder stop;
      select, among the one or more candidate MRC zones, a target MRC zone; and

control, via the controller, the vehicle to stop in the target MRC zone.

# FIG. 1

110 — SENSOR UNIT ⟷ PROCESSOR (130) ⟷ DISPLAY — 140

120 — CONTROLLER ⟷ PROCESSOR ⟷ COMMUNICATION APPARATUS — 150

160 — MEMORY

100

# FIG. 2

130

VEHICLE STATE INFORMATION OBTAINING UNIT — 1310

SURROUNDING ENVIRONMENT INFORMATION OBTAINING UNIT — 1320

ROAD INFORMATION OBTAINING UNIT — 1321

NEIGHBORING OBJECT INFORMATION OBTAINING UNIT — 1322

POTENTIAL MRC ZONE SEARCHING UNIT — 1340

MRM STRATEGY DETERMINING UNIT — 1330

TARGET MRC ZONE DETERMINING UNIT — 1350

MRM CONTROLLING UNIT — 1360

# FIG. 3

| Categroy | Traffic Lane Stop (301) | | Road Shoulder Stop (303) | |
|---|---|---|---|---|
| Classification | Type 1 | Type 2 | Type 3 | |
| | Straight Stop (311) | In-lane Stop (312) | Half-shoulder Stop (313) | Full-shoulder Stop (314) |
| Description | | | | |
| Lateral Control (321) | Not available | Use | Use | Use |
| Acceleration control (322) | Prohibition | NOT Required | May use to keep current speed | May use to keep current speed |
| Deceleration Control (323) | Use | Use | Use | Use |
| Lane Change (324) | Prohibition | Prohibition | Use | Use |
| Potential stopping Location (325) | Unnecessary | Unnecessary | Use | Use |

FIG. 4A

## FIG. 4B

FIG. 5

# FIG. 6A

601

$d_{min,x}$

$d_x$

$d_y$

$d_{min,y}$

100

RSSx < 0
RSSy > 0

# FIG. 6B

611

$d_x$

$d_{min,x}$

$d_y$

$d_{min,y}$

100

RSSx > 0
RSSy < 0

# FIG. 6C

621

$d_{min,x}$

$d_x$

$d_y$

$d_{min,y}$

100

RSSx < 0
RSSy < 0

## FIG. 7

# FIG. 8A

FIG. 8B

# FIG. 9

S910

ADS OPERATES NORMALLY

A1

A2

S920

PERFORM MRM

B1

S950

REQUEST INTERVENTION
TO DRIVER

C2

C1

S930

MRC

B2

S940

D1

ADS IN STANDBY MODE OR
OFF-STATE

FIG. 10

START

S1001 → LATERAL CONTROL POSSIBLE? —NO→

YES
↓

S1003 → SHOULDER OF ROAD EXIST? —NO→

YES
↓

S1005 → SIZE OF SHOULDER > SIZE OF VEHICLE —NO→

YES
↓

S1007 → WHEN PERFORMING FULL SHOULDER STOP, IS LIABILITY OF AN ACCIDENT IN AN OWN VEHICLE? —YES→ WHEN PERFORMING HALF SHOULDER STOP, IS LIABILITY OF AN ACCIDENT IN AN OWN VEHICLE? —S1011—YES→ WHEN PERFORMING IN-LANE STOP, IS LIABILITY OF AN ACCIDENT IN AN OWN VEHICLE? —S1017—YES→

S1015 → POSSIBLE TO DETECT A LANE? —NO→

YES
↓

NO ↓ S1009

SELECT FULL SHOULDER STOP AS A FINAL MRM STRATEGY

NO ↓ S1013

SELECT HALF SHOULDER STOP AS A FINAL MRM STRATEGY

NO ↓ S1019

SELECT IN-LANE STOP AS A FINAL MRM STRATEGY

S1021

SELECT STRAIGHT STOP AS A FINAL MRM STRATEGY

END

34

# FIG. 11

START

S1110 — DETERMINE WHETHER AN MRM IS NEEDED

S1120 — SET A REGION OF INTEREST

S1130 — SEARCH FOR POTENTIAL MRC ZONE

S1140 — SELECT A TARGET MRC ZONE

END

# FIG. 12

# FIG. 13

FIG. 14

Europäisches
Patentamt

European
Patent Office

Office européen
des brevets

# EUROPEAN SEARCH REPORT

**Application Number**

EP 25 15 4615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/406354 A1 (PARK JONG SUNG [KR] ET AL) 21 December 2023 (2023-12-21) | 1,3,7-15 | INV. B60W30/095 B60W60/00 |
| Y | * figures 1,2,4 * <br> * paragraphs [0009] - [0012], [0020], [0040], [0063], [0065], [0069], [0077], [0079], [0081] - [0089] * <br> * the whole document * | 2-6,14 | ADD. B60W50/029 |
| Y | WO 2022/092681 A1 (HYUNDAI MOTOR CO LTD [KR]; KIA CORP [KR]) 5 May 2022 (2022-05-05) <br> * figures 4,11-13 * <br> * paragraphs [0067], [0144], [0149] - [0150], [0200] * <br> * the whole document * | 2-6,14 | |

-----

-----

**TECHNICAL FIELDS SEARCHED (IPC)**

B60W

The present search report has been drawn up for all claims

| Place of search | Date of completion of the search | Examiner |
|---|---|---|
| Munich | 16 June 2025 | Dubreuil, Cédric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

2

## ANNEX TO THE EUROPEAN SEARCH REPORT
## ON EUROPEAN PATENT APPLICATION NO.

EP 25 15 4615

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | Publication date | Patent family member(s) | | Publication date |
|---|---|---|---|---|
| US 2023406354 A1 | 21-12-2023 | CN | 117246317 A | 19-12-2023 |
| | | EP | 4292899 A1 | 20-12-2023 |
| | | KR | 20230173252 A | 27-12-2023 |
| | | US | 2023406354 A1 | 21-12-2023 |
| WO 2022092681 A1 | 05-05-2022 | CN | 116529135 A | 01-08-2023 |
| | | CN | 116529136 A | 01-08-2023 |
| | | CN | 116529137 A | 01-08-2023 |
| | | CN | 116529138 A | 01-08-2023 |
| | | CN | 116529139 A | 01-08-2023 |
| | | CN | 116529140 A | 01-08-2023 |
| | | CN | 119953402 A | 09-05-2025 |
| | | DE | 112021005714 T5 | 23-11-2023 |
| | | DE | 112021005725 T5 | 09-11-2023 |
| | | DE | 112021005727 T5 | 21-09-2023 |
| | | DE | 112021005728 T5 | 05-10-2023 |
| | | DE | 112021005729 T5 | 05-10-2023 |
| | | DE | 112021005735 T5 | 21-09-2023 |
| | | JP | 2023548299 A | 16-11-2023 |
| | | JP | 2023550015 A | 30-11-2023 |
| | | JP | 2023550016 A | 30-11-2023 |
| | | JP | 2023550017 A | 30-11-2023 |
| | | JP | 2023550018 A | 30-11-2023 |
| | | JP | 2023550019 A | 30-11-2023 |
| | | KR | 20220056118 A | 04-05-2022 |
| | | KR | 20220056119 A | 04-05-2022 |
| | | KR | 20220056120 A | 04-05-2022 |
| | | KR | 20220056121 A | 04-05-2022 |
| | | KR | 20220056122 A | 04-05-2022 |
| | | KR | 20220056123 A | 04-05-2022 |
| | | KR | 20250040901 A | 25-03-2025 |
| | | US | 2023382371 A1 | 30-11-2023 |
| | | US | 2023391368 A1 | 07-12-2023 |
| | | US | 2023391369 A1 | 07-12-2023 |
| | | US | 2023399018 A1 | 14-12-2023 |
| | | US | 2023399019 A1 | 14-12-2023 |
| | | US | 2024017749 A1 | 18-01-2024 |
| | | WO | 2022092681 A1 | 05-05-2022 |
| | | WO | 2022092682 A1 | 05-05-2022 |
| | | WO | 2022092683 A1 | 05-05-2022 |
| | | WO | 2022092684 A1 | 05-05-2022 |
| | | WO | 2022092685 A1 | 05-05-2022 |
| | | WO | 2022092686 A1 | 05-05-2022 |

EPO FORM P0459

For more details about this annex : see Official Journal of the European Patent Office, No. 12/82